# EUROPEAN PATENT APPLICATION

(11) **EP 2 743 623 A1**
(43) Date of publication of application: **18.06.2014**
(21) Application number: 13180289.4
(22) Date of filing: 13.08.2013
(51) Int. Cl.: F27B 3/20, F27D 99/00, F27B 3/22

(54) **Furnace and method for heating an atmosphere in a combustion chamber of a furnace**

(30) Priority: 11.12.2012 US 201261735598 P; 12.04.2013 US 201313861605
(71) Applicant: Linde Aktiengesellschaft, 80331 München (DE)
(72) Inventor: Simpson, Neil G., Ayton, Eyemouth,, Berwickshire TD14 5QX (GB)
(74) Representative: Hofmann, Andreas

(57) **Abstract**

In order to overcome the problems that earlier furnaces and methods have experienced, in particular to provide for a furnace (10) as well as for a method enabling an effective use and symmetrical melting of the glass melt, it is proposed to heat an atmosphere in a combustion chamber (22) of the furnace (10), comprising:
- firing a first plurality of lances (32, 33) from a first side of the furnace (10) into the combustion chamber (22) proximate a charging end (14) of said furnace (10), said firing of the first plurality including at least one stream of fuel and at least one stream of oxidant; and
- firing a second plurality of lances (34, 35) from a second side of the furnace (10) opposite to the first side into the combustion chamber (22) proximate the charging end (14), said firing of the second plurality including at least another stream of fuel and at least another stream of oxidant.

## Description

### Technical field of the present invention

The present invention basically relates to the technical field of boosting fuel and oxygen provided to a furnace such as a glass melting furnace.

### Technological background of the present invention

Flat flame oxy-fuel burners are known to be very unstable in an air-fuel environment. This is because the momentum of the oxy-fuel flames discharged from the burner is relatively low due to a high momentum of air fueled flames which include up to 79 percent nitrogen. With a conventional lay out of burners of, for example, a glass melting furnace, the burners are traditionally operated continuously with fifty percent of the burners operating from each side.

In order to achieve additional pull increase or recovery of the furnace, the oxy-fuel burners are sometimes positioned in the zero port area of the furnace. The zero port area of the furnace is located between the furnace charger and port number 1.

The net effect is that the zero port burners, i. e. the oxy-fuel burners positioned between the charger and port number 1 of the furnace, on the firing side produce a discharge flame drawn towards the number 1 port, while the zero port oxy-fuel burners on the exhaust side are deflected toward the charger.

This results in an ineffective use and asymmetrical melting of the glass melt.

### Disclosure of the present invention: object, solution, advantages

Starting from the disadvantages and shortcomings as described above and taking the prior art as discussed into account, an object of the present invention is to overcome the problems that earlier furnaces and methods have experienced, in particular to provide for a furnace as well as for a method enabling an effective use and symmetrical melting of the glass melt.

This object is accomplished by a furnace comprising the features of claim 1 as well as by a method comprising the features of claim 9, in particular by oxy-fuel boosting of a zero port area in a glass melter using a reversing system. Advantageous embodiments and expedient improvements of the present invention are disclosed in the respective dependent claims.

The present invention basically provides for a furnace including
- a housing having a charging end, a discharge end or firing end downstream of the charging end, and a combustion chamber within the housing between the charging end and the discharge end or firing end;
- a first pair of lances disposed at a first side of the housing proximate the charging end and in communication with the combustion chamber, one lance of said first pair to provide a first fuel to said combustion chamber, and another lance of said first pair to provide a first oxidant to said combustion chamber; and
- a second pair of lances disposed at a second side of the housing opposite to the first side proximate the charging end and in communication with the combustion chamber, one lance of said second pair to provide a second fuel to said combustion chamber, and another lance of said second pair to provide a second oxidant to said combustion chamber.

According to an advantageous embodiment of the present invention,
- the first pair of lances is mounted to the first side of the housing at an angle of between eleven degrees and sixty degrees with respect to each other; and/or
- the second pair of lances is mounted to the second side of the housing at an angle of between eleven degrees and sixty degrees with respect to each other,
regardless of the initial disposition of the lances with respect to the corresponding sidewall at the zero port area.

The first pair of lances and the second pair of lances may expediently be constructed for all to provide fuel to said combustion chamber.

A favoured embodiment of the present invention may also call for in particular applications limiting each one of the burners or lances to either of fuel or oxygen. The first and/or second fuel may be selected from the group consisting of propane, butane, syngas or any other fuels conducive to the furnace and the materials to be heated and/or melted. The first and/or second oxidant may comprise oxygen, in particular eighty percent to hundred percent oxygen.

In a preferred embodiment of the present invention, the furnace may be a regenerative furnace, and the first pair of lances and the second pair of lances proximate the charging end may be disposed upstream of a first port of a regenerator for said furnace. In connection therewith or independently thereof, the furnace may include a batch charger arranged at an upstream end of the furnace opposite to a downstream end from which melted or fine glass product is discharged or pulled, i. e. from the discharge end or firing end of the housing.

According to an advantageous embodiment of the present invention, the one lance of the first pair of lances may be mounted to the first side perpendicular to a longitudinal axis of the combustion chamber extending between the charging end and the discharge end or firing end, and the one lance of the second pair of lances may be mounted to the second side perpendicular to said longitudinal axis.

In other words, when the furnace is firing the first burner of the first pair may be arranged to fire perpendicular or at least substantially perpendicular to a wall of the furnace in which it is mounted, while another burner of the first pair firing oxygen (O₂) may be positioned at an angle with respect to the wall it is mounted to, said angle being greater than that of the first burner, for example at least two degrees from the perpendicular.

Similarly, the first burner of the second pair may be mounted perpendicular or at least substantially perpendicular with respect to a wall of the furnace to which it is mounted, while another burner of the second pair may be mounted at a greater angle than the perpendicular, for example two degrees. The first burner of the first pair and the first burner of the second pair may be mounted at least substantially perpendicular to a longitudinal axis of the combustion chamber, which axis may extend from the charging end to the discharge or firing end.

In an expedient embodiment of the present invention, the first pair of lances and the second pair of lances may be moveably positionable independently of each other.

In connection therewith or independently thereof,
- the first pair of lances at the first side may be in registration with the second pair of lances at the second side; and/or
- the first pair of lances may be mounted to a first pair of burners, and the second pair of lances may be mounted to a second pair of burners.

The present invention further relates to method for heating an atmosphere in a combustion chamber of a furnace, comprising:
- firing a first plurality of lances from a first side of the furnace into the combustion chamber proximate a charging end of said furnace, said firing of the first plurality including at least one stream of fuel and at least one stream of oxidant; and
- firing a second plurality of lances from a second side of the furnace opposite to the first side into the combustion chamber proximate the charging end, said firing of the second plurality including at least another stream of fuel and at least another stream of oxidant.

According to a favoured embodiment of the present invention, the firing of the first plurality of lances and of the second plurality of lances comprises the at least one stream of fuel of said first plurality firing toward at least said another stream of oxidant of the second plurality in registration with the at least one stream of fuel, and the at least one stream of oxidant of said first plurality firing toward at least said another stream of fuel of said second plurality in registration with the at least one stream of oxidant.

Preferably, the firing of the first plurality of lances and of the second plurality of lances may be all with the fuel.

An advantageous embodiment of the present invention may also call for in particular applications limiting each one of the burners or lances to either of fuel or oxygen. The first and/or second fuel may be selected from the group consisting of propane, butane, syngas or any other fuels conducive to the furnace and the materials to be heated and/or melted. The first and/or second oxidant may comprise oxygen, in particular eighty percent to hundred percent oxygen.

The present invention may expediently comprise reversing the firing of the first plurality of lances and of the second plurality of lances, said reversing occurring in particular after a period of ten minutes to forty minutes of the firing.

In a favoured embodiment of the present invention, only either of the fuel or of the oxidant to the first plurality of lances and to the second plurality of lances may be provided during the firing of the first plurality of lances and of the second plurality of lances prior to completing the reversing.

Such reversing may preferably occur in a regenerative furnace, further comprising:
- adjusting combustion air from a regenerator for the furnace;
- introducing the combustion air into the combustion chamber of said furnace; and
- controlling an amount of the one and another streams of oxidant being introduced into said combustion chamber.

Accordingly, the ports may indicate reversal of the furnace with the regenerators. In such a situation, all of the burners are injecting fuel only into the combustion chamber, and no oxygen is being injected through any of the burners.

Eventually, as the regenerators reverse direction for combustion in the furnace, at least two of the burners may assume injecting oxygen into the combustion chamber in such a manner that the two burners injecting the oxygen may be opposed to each other in the zero port area.

### Brief description of the drawings

For a more complete understanding of the present inventive embodiment disclosures and as already discussed above, there are several options to embody as well as to improve the teaching of the present invention in an advantageous manner. To this aim, reference may be made to the claims dependent on claim 1 and on claim 9; further improvements, features and advantages of the present invention are explained below in more detail with reference to preferred embodiments by way of non-limiting example and to the appended drawing figure taken in conjunction with the following description of the embodiments, of which:
FIG. 1 shows a top plan view of a schematic for a melter according to the present inventive embodiments firing from left hand side (LHS) to right hand side (RHS);
FIG. 2 shows a top plan view of a schematic for a melter according to the present inventive embodiments firing from right hand side (RHS) to left hand side (LHS); and
FIG. 3 shows the melter of FIG. 1 and of FIG. 2 during reversal.

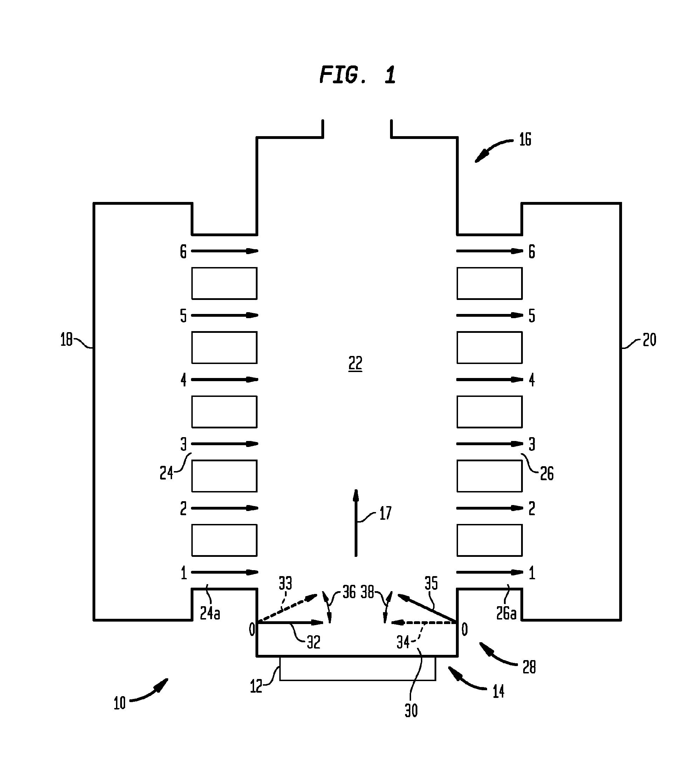

In the appended drawing figures, like equipment is labelled with the same reference numerals throughout the description of FIG. 1 to FIG. 3.

### Detailed description of the drawings; best way of embodying the present invention

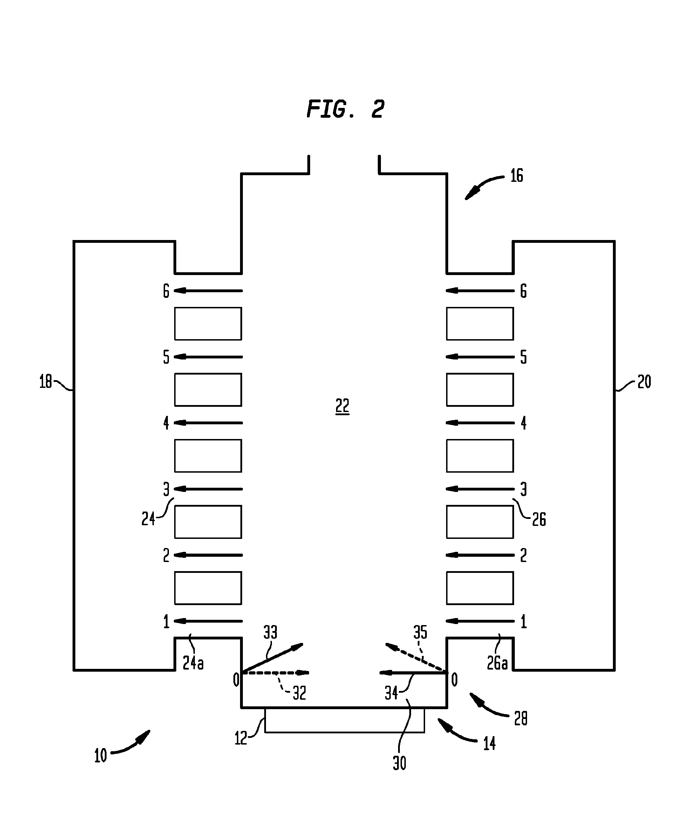

Referring to FIG. 1 and to FIG. 2, there is shown a furnace 10 or melter for use to melt for example glass, steel, scrap or any other kind of material selected. While the furnace 10 shown is a regenerative furnace, i. e. a furnace having a regenerator positioned at least at one side thereof, it is understood that the embodiments of the present invention can be used with other furnaces such as for example hundred percent oxy-fuel furnaces/melters or recuperative furnaces/melters.

Burners and lances discussed hereinafter may be constructed to operate in a pure fuel or a pure oxygen operating mode. However, for most applications at least one of the burner or lance assemblies is disposed to operate in a fuel rich and/or an oxygen rich mode. Such construction and arrangement allows for greater flexibility of the present embodiments.

In addition, at least one of the burner or lance assemblies may have a plurality of ducts for providing, by injection for example, fuel and oxygen. In such construction, a supply of the fuel and the oxygen can be maintained separately for injection into a combustion atmosphere of the furnace.

Alternatively, at least one of the burner or lance assemblies may have a common duct for injection of the fuel and the oxygen, and if such construction is used, the fuel and the oxygen may have to be provided at separate intervals into the common duct.

The furnace 10 of the present embodiments increases throughput (known in the industry as "pull") of the glass melt and reduces an amount of nitrous oxide (NOx) formed in the furnace. Reduction of NOx is desirable to comply with environmental laws, community regulations and zoning. The NOx emissions are reduced by use of the fuel and oxygen lances in a staged arrangement, and such embodiments obviate the need for costly secondary or ancillary NOx abatement equipment to be mounted for use with the furnace 10.

As used herein, a "burner" is an apparatus mounted to a furnace, such as the furnace 10, to heat an atmosphere in a combustion chamber of the furnace. The burner may include one or a plurality of conduits through which a fuel or fuels, or a fuel and an oxidant (such as oxygen) are provided to the combustion atmosphere.

A "lance" is an apparatus which usually includes one conduit through which either a fuel or an oxidant is provided such as by example injection, to the combustion atmosphere of the furnace. It is therefore possible to have a plurality of lances mounted in the burner to function as the "conduits" for the burner to distribute both the fuel and oxidant to the combustion atmosphere.

Typically, the burner is mounted to a burner block which itself is mounted to a sidewall or a crown (the roof) of the furnace. Similarly, one or a plurality of lances could be mounted to a burner block if a "burner" is not being used. The burner block containing the lances can also be mounted to a sidewall or the crown of the furnace.

The furnace 10 includes a batch charger 12 arranged at an upstream end 14 of the furnace 10 opposite to a downstream end 16 from which melted or fine glass product is discharged or pulled, i. e. from the discharge end or firing end of the housing. A flow of the glass melt is indicated by arrow 17. In the furnace 10 shown, a pair of regenerators 18, 20 are provided for fluid combustion flow with respect to a combustion chamber 22 of the furnace 10.

A combustion atmosphere is provided in the combustion chamber 22. In FIG. 1, the furnace 10 is shown firing from the left-hand side (LHS) regenerator 18 to the right-hand side (RHS) regenerator 20; while in FIG. 2, the furnace is shown firing from the right-hand side (RHS) regenerator 20 to the left-hand side (LHS) regenerator 18.

The furnace 10 includes a plurality of LHS ports 24, and RHS ports 26 (each numbered 1 to 6) in fluid communication with a corresponding one of the regenerators 18, 20, respectively. The actual number of ports can be from 1 to 10 for example. A zero port area 28 of the furnace 10 is provided between the batch charger 12 and the ports 24a, 26a. A batch blanket 30 of raw glass ingredient material floats on a surface of the glass melt in the furnace 10, and is provided immediately downstream of the batch charger 12 in the zero port area 28.

When referring to FIG. 1 to FIG. 3, a solid line with respect to the burners or lances represents same for providing fuel, such as by injecting; while a broken line with respect to such burners or lances is representative of providing an oxidant (for example oxygen), such as for example by injection.

In FIG. 1, wherein the left-hand side regenerator 18 is firing, a burner 32 is shown disposed for firing fuel, while in FIG. 2, with the right-hand side regenerator 20 firing a burner 34 is shown for firing fuel as well. That is, instead of having only one burner per side of a furnace, the present embodiments call for having the burners 32, 34 at each side of the zero port area 28 which are able to reverse depending on the firing direction of the regenerators 18, 20.

As shown in FIG. 1 for example, when the furnace 10 is firing the burner 32 is arranged to fire perpendicular or at least substantially perpendicular to a wall of the furnace in which it is mounted, while another burner 33 firing oxygen (O₂) is positioned at an angle with respect to the wall it is mounted to, said angle being greater than that of the burner 32, for example at least two degrees from the perpendicular.

Similarly, referring also to FIG. 2, the burner 34 is mounted perpendicular or at least substantially perpendicular with respect to a wall of the furnace 10 to which it is mounted, while another burner 35 is mounted at a greater angle than the perpendicular, for example two degrees. The burners 32, 34 are mounted at least substantially perpendicular to a longitudinal axis of the combustion chamber 22, which axis extends from the charging end to the discharge or firing end.

When firing left to right as shown in FIG. 1, more fuel will be injected into the combustion chamber 22 through the burner 32 on the firing side of the furnace 10, than from the burner 35 which is angled with respect to the sidewall. Conversely, when firing right to left as shown in FIG. 2, more fuel will be injected into the combustion chamber 22 through the burner 34 arranged perpendicular with respect to the sidewall than the angled burner 33.

The present embodiments also call for in particular applications limiting each one of the burners 32, 33, 34, 35 (collectively referred to herein as 32 to 35), to either of fuel or oxygen. The fuel may be propane, butane, syngas or any other fuels conducive to the furnace 10 and the materials to be heated and/or melted.

Referring to FIG. 1, an embodiment is provided wherein the burners 32, 35 are firing with hundred percent fuel, while the burners 33, 34 are firing with hundred percent oxygen. Another embodiment calls for the burners 32, 35 each firing with both the fuel and the oxygen, or with just the burners 32, 35 each firing with fuel only and the burners 33, 34 not firing at all.

Referring to FIG. 2, another embodiment is shown wherein the burners 33, 34 are firing with fuel only, while the burners 32, 35 are firing (or cooling) with only oxygen or other gas such as propane, butane or syngas.

With respect to the embodiments of FIG. 1 and of FIG. 2, wherein one or more of the burners 32 to 35 are firing with the fuel, such firing can be with hundred percent of the fuel. Similarly, if one or a plurality of the burners 32, 35 are firing with an oxidant (for cooling for example) then it is possible to provide hundred percent of the oxidant through the respective burner.

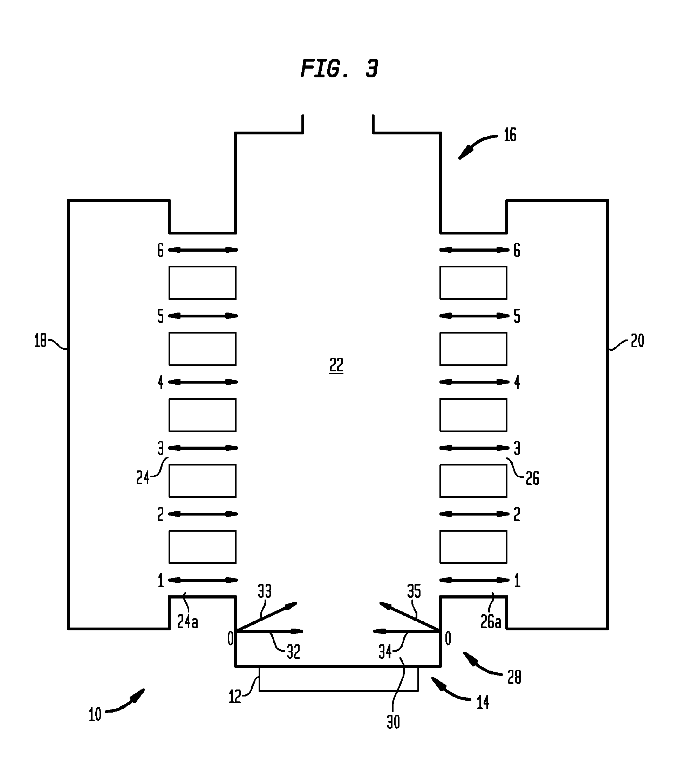

FIG. 3 shows the furnace 10 and the burners 32 to 35 "reversing", as occurs in a regenerative furnace. Accordingly, the ports 24, 26 (1 to 6 of LHS and RHS regenerators) as shown by arrows are indicating reversal of the furnace with the regenerators 18, 20. In such a situation, all of the burners 32 to 35 are injecting fuel only into the combustion chamber 22, and no oxygen is being injected through any of the burners 32, 35.

Eventually, as the regenerators 18, 20 reverse direction for combustion in the furnace, at least two of the burners 32, 35 will assume injecting oxygen into the combustion chamber 22 in such a manner that the two burners injecting the oxygen are opposed to each other in the zero port area 28.

By way of example only, there may be two to three reversals per hour of furnace operation. That is, the regenerators 18, 20 would operate for from ten minutes to forty minutes LHS to RHS, after which it would take from thirty seconds to two minutes to reverse the operational flow of the regenerators (moving from FIG. 1 to FIG. 3, then to FIG. 2), followed by a ten minutes to forty minutes operation of the regenerators in the opposite duration RHS to LHS.

The cycle would then reverse itself again and as many times as the operators thought necessary. During the reversal (cf. FIG. 3) it is possible to run only fuel or only oxidant through the burners 32 to 35.

During the furnace reversal of FIG. 3, the burners 32 to 35 may continue operating with injection of oxygen and fuel. The injection of hundred percent fuel reduces localized concentration and partial pressure of oxygen and creates a localized fuel rich zone at the zero port area 28. Prior to completion of the reversing, the first and second plurality of lances may all be fired with only fuel.

This small localized zone of fuel will suppress the foam layer at the glass melt, thereby reducing an insulating effect and increasing heat transfer effectiveness at the melt. The bulk of the fuel injected dissociates into carbon C and hydroxide OH radicals which burn in the combustion atmosphere of the furnace 10.

Oxy-fuel burners can be used and positioned in the furnace 10 at positions similar to those shown for the burners 32 to 35 to increase pull rate. These burners typically fire continuously during a furnace reversal when there is no fuel from the port burners.

The net effect of having an oxy-fuel burner in an air environment is that the NOx will increase during the reversal. In the present embodiments, during reversal, the burners 32 to 35 can operate in fuel rich mode (i. e., fuel only) and as a result there is a significant reduction in NOx.

The burners 32 to 35 can be constructed with a single conduit or alternatively a plurality, such as two distinct conduits, one for fuel and another for oxygen.

Furnace efficiency is directly proportional to excess oxygen. In the present embodiments, the excess oxygen in the exhaust regenerator can be used to modulate the combustion air and/or the oxygen injected. That is, a reduction or other adjustment of combustion air provided from the regenerators 18, 20 can be used to compensate for the amount of oxygen provided by the lances or burners 32 to 35. The higher the volume of oxygen, the lower the volume of combustion air. The lower the volume of combustion air, the more the staging of the primary fuel burners.

Referring to FIG. 1 for example, the more staging of the burners, the lower the NOx and typically the higher the heat transfer. The addition of oxygen lowers the combustion air flow which increases the air preheat. Lower combustion air volume will delay mixing of the primary fuel. The fuel injected by the lance 35 is secondary fuel staging with completion of combustion by the secondary oxygen stream 34. The present embodiments use both fuel and oxygen staging.

The present embodiments provide for a plurality of possible firing configurations of the burners 32, 34 and 33, 35. For example, it may be beneficial to have more fuel on a firing side of the furnace 10, and more oxygen on an exhaust side of the furnace 10. Therefore, an amount of the fuel and oxygen being supplied to the burners 32 to 35 can be adjusted between zero percent and hundred percent of the flow to accommodate a particular melting operation for the furnace 10.

It is also possible that it may be required to have a minimum flow of either fuel or oxygen through every one of the burners 32, 34 and 33, 35 so as to cool components of the burners and/or lances. Providing fuel and oxidant through all of the burners 32, 34 and 33, 35 will achieve an adjustable flat/fishtail flame from the burners.

An angle 36 between the burners 32, 33 or lances, and an angle 38 between the burners 34, 35 or lances can be for example from eleven degrees to sixty degrees, regardless of the initial disposition of the burner 32, 34 with respect to the corresponding sidewall at the zero port area 28.

The present embodiments provide for increased flexibility of firing the burners 32 to 35 in order to fine tune the oxygen-gas mixture to accommodate a high momentum air-gas firing environment of the furnace 10. That is, the present embodiments reduce instability of known furnaces.

Whereas conventional firing is a compromise, the present embodiments offer the ability to position the burners 32, 34 and 33, 35 to achieve the best possible combustion parameters and flame being discharged from each side of the zero port area 28 of the furnace 10. This will provide for hundred percent staging of the furnace 10 and therefore, results in a much lower formation of NOx.

In an embodiment of the invention, the burners 32, 33 on the left hand side, and the burners 34, 35 on the right hand side will fire with gas in the oxy-gas ratios in each burner indicated previously to achieve a reversing, fishtail type burner.

It will be understood that the embodiments described herein are merely exemplary, and that one skilled in the art may make variations and modifications without departing from the spirit and scope of the invention. All such variations and modifications are intended to be included within the scope of the invention as described and claimed herein. Further, all embodiments disclosed are not necessarily in the alternative, as various embodiments of the invention may be combined to provide the desired result.

### List of reference numerals

- 10: furnace, in particular regenerative furnace, or melter, in particular regenerative melter
- 12: batch charger
- 14: charging end or upstream end of furnace 10
- 16: discharge end or firing end or downstream end of furnace 10
- 17: flow of glass melt
- 18: first regenerator or left-hand side (LHS) regenerator
- 20: second regenerator or right-hand side (RHS) regenerator
- 22: combustion chamber of furnace 10
- 24: first port or left-hand side (LHS) port
- 26: second port or right-hand side (RHS) port
- 28: zero port area
- 30: batch blanket
- 32: burner or lance
- 33: burner or lance
- 34: burner or lance
- 35: burner or lance
- 36: angle between burners or lances 32, 33
- 38: angle between burners or lances 34, 35

## Claims

1. A furnace (10), comprising:
- a housing having a charging end (14), a discharge end or firing end (16) downstream of the charging end (14), and a combustion chamber (22) within the housing between the charging end (14) and the discharge end or firing end (16);
- a first pair of lances (32, 33) disposed at a first side of the housing proximate the charging end (14) and in communication with the combustion chamber (22), the first pair of lances (32, 33) constructed and arranged for one lance (32) of said first pair to provide a first fuel to said combustion chamber (22), and another lance of said first pair (33) to provide a first oxidant to said combustion chamber (22); and
- a second pair of lances (34, 35) disposed at a second side of the housing opposite to the first side proximate the charging end (14) and in communication with the combustion chamber (22), the second pair of lances (34, 35) constructed and arranged for one lance (34) of said second pair to provide a second fuel to said combustion chamber (22), and another lance (35) of said second pair to provide a second oxidant to said combustion chamber (22).

2. The furnace according to claim 1,
- wherein the first pair of lances (32, 33) is mounted to the first side of the housing at an angle (36) of between eleven degrees and sixty degrees with respect to each other; and/or
- wherein the second pair of lances (34, 35) is mounted to the second side of the housing at an angle of between eleven degrees and sixty degrees with respect to each other.

3. The furnace according to claim 1 or 2, wherein the first pair of lances (32, 33) and the second pair of lances (34, 35) are constructed for all to provide fuel to said combustion chamber (22).

4. The furnace according to at least one of claims 1 to 3,
- wherein the first and second fuel is selected from the group consisting of propane, butane and syngas; and
- wherein the first and second oxidant comprises oxygen, in particular eighty percent to hundred percent oxygen.

5. The furnace according to at least one of claims 1 to 4, wherein the furnace (10) is a regenerative furnace, and the first pair of lances (32, 33) and the second pair of lances (34, 35) proximate the charging end (14) are disposed upstream of a first port (24) of a regenerator (18) for said furnace (10).

6. The furnace according to at least one of claims 1 to 5, wherein the one lance (32) of the first pair of lances (32, 33) is mounted to the first side perpendicular to a longitudinal axis of the combustion chamber (22) extending between the charging end (14) and the discharge end or firing end (16), and the one lance (34) of the second pair of lances (34, 35) is mounted to the second side perpendicular to said longitudinal axis.

7. The furnace according to at least one of claims 1 to 6, wherein the first pair of lances (32, 33) and the second pair of lances (34, 35) are moveably positionable independently of each other.

8. The furnace according to at least one of claims 1 to 7,
- wherein the first pair of lances (32, 33) at the first side is in registration with the second pair of lances (34, 35) at the second side; and/or
- wherein the first pair of lances (32, 33) is mounted to a first pair of burners, and the second pair of lances (34, 35) is mounted to a second pair of burners.

9. A method for heating an atmosphere in a combustion chamber (22) of a furnace (10), comprising:
- firing a first plurality of lances (32, 33) from a first side of the furnace (10) into the combustion chamber (22) proximate a charging end (14) of said furnace (10), said firing of the first plurality including at least one stream of fuel and at least one stream of oxidant; and
- firing a second plurality of lances (34, 35) from a second side of the furnace (10) opposite to the first side into the combustion chamber (22) proximate the charging end (14), said firing of the second plurality including at least another stream of fuel and at least another stream of oxidant.

10. The method according to claim 9, wherein the firing of the first plurality of lances (32, 33) and of the second plurality of lances (34, 35) comprises the at least one stream of fuel of said first plurality firing toward at least said another stream of oxidant of the second plurality in registration with the at least one stream of fuel, and the at least one stream of oxidant of said first plurality firing toward at least said another stream of fuel of said second plurality in registration with the at least one stream of oxidant.

11. The method according to claim 9 or 10, wherein the firing of the first plurality of lances (32, 33) and of the second plurality of lances (34, 35) is all with the fuel.

12. The method according to at least one of claims 9 to 11,
- wherein the fuel is selected from the group consisting of propane, butane and syngas; and/or
- wherein the oxidant comprises oxygen, in particular eighty percent to hundred percent oxygen.

13. The method according to at least one of claims 9 to 12, further comprising reversing the firing of the first plurality of lances (32, 33) and of the second plurality of lances (34, 35), said reversing occurring in particular after a period of ten minutes to forty minutes of the firing.

14. The method according to claim 13, further comprising providing only either of the fuel or of the oxidant to the first plurality of lances (32, 33) and to the second plurality of lances (34, 35) during the firing of the first plurality of lances (32, 33) and of the second plurality of lances (34, 35) prior to completing the reversing.

15. The method according to at least one of claims 9 to 14, wherein the furnace (10) is a regenerative furnace, further comprising:
- adjusting combustion air from a regenerator (18, 20) for the furnace (10);
- introducing the combustion air into the combustion chamber (22) of said furnace (10); and
- controlling an amount of the one and another streams of oxidant being introduced into said combustion chamber (22).
